# EUROPEAN PATENT APPLICATION

(11) **EP 1 843 547 A2**
(43) Date of publication of application: **10.10.2007**
(21) Application number: 07103326.0
(22) Date of filing: 01.03.2007
(51) Int. Cl.: H04L 29/06, H04M 7/00

(54) **Method, system and user equipment in a combination of a CS call and an IMS session**

(30) Priority: 04.04.2006 US 788711 P
(71) Applicant: Nokia Corporation, 02150 Espoo (FI)
(72) Inventor: Mutikainen, Jari, 01830 Lepsämä (FI)
(74) Representative: TBK-Patent

(57) **Abstract**

A method and system of providing an unambiguous connection between a first user equipment and a second user equipment in a combination of a circuit switched call and a packet switched multimedia session. The method comprises to construct an equipment identifier by a first user equipment, wherein the equipment identifier distinguishes the first user equipment from any other user equipment of a same user and comprises a uniform resource name. Further, the first user equipment is registered in a session control protocol environment by sending the equipment identifier to a session control protocol registrar. In addition, a uniform resource identifier is returned by the session control protocol registrar, wherein the uniform resource identifier routes to a session control protocol application, and wherein the uniform resource identifier includes the equipment identifier as an opaque parameter. Finally, the opaque parameter is advertised by the first user equipment in a circuit switched call.

## Description

### Field of the Invention

The present invention relates to a method and a system to provide an unambiguous connection between a first user equipment and a second user equipment in a combination of a circuit switched call and an internet protocol multimedia session, as well as to these user equipment.

### Related Background Art

The specifications 3GPP R7 TR 24.879 and TS 24.279 define principles and a framework how a circuit switched (CS) call can be combined with any one-to-one internet protocol (IP) multimedia subsystem (IMS) session. It defines a solution how the device identities in an IMS session can be tied to the device identities used in a CS call. A so-called personal mobile equipment identifier (PMI) is the basis of this solution. The purpose of the PMI is to tie the IMS device capabilities to the device that is used in the CS call. For example in a combination of real-time video streaming service and CS call, the user equipment (UE) would learn the video streaming capability of the other party's device, and when it recognizes that it is in a CS call with that video streaming capable device, it can advertise the video streaming service availability to the end user.

The PMI is a random string generated by the UE. The UE publishes its PMI via a user-to-user service (UUS) data element in a CS call and via a user agent header in session initiation protocol (SIP) requests and responses.

The PMI as it is currently defined in the specifications 3GPP R7 TR 24.879 and TS 24.279 works well in an environment where the users do not have multiple terminals registered for the same IMS public user identity (ID). The user may have multiple terminals, each of them having an universal integrated circuit card (UICC) which holds the IP multimedia services identity module (ISIM) which stores the IMS private user ID (IMPI) and universal subscriber identity module (USIM) which stores the CS identity (international mobile subscriber identity - IMSI). As per principles in the specification 3GPP R7 TR 24.879, the IMS public user ID (IMPU) to which this IMPI has been registered should be associated to the E.164 that equals to the MSISDN (mobile subscriber ISDN number) to which the IMSI belongs to. In other words, the subscriber and the device can be reached using the same E.164 number via IMS (in what case the E.164 is associated to the IMPU of this user and device) and via CS (in what case the E.164 is the user's MSISDN). The limitation in the current specification 3GPP R7 TR 24.879 is that the end user should not have multiple IMS terminals registered to the same IMPU and associated to the same E.164 number, so the end user can have multiple IMS registered terminals, but they should each use different IMPU and associated E.164 (corresponding to the MSISDN of each CS subscription).

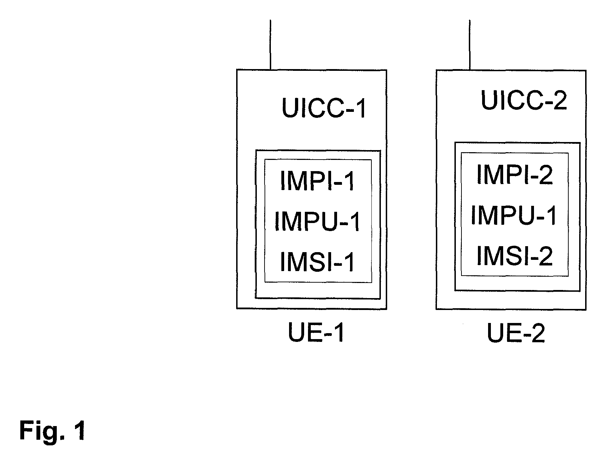

Fig. 1 illustrates this kind of problematic configuration, i.e. two devices, containing UICC1 and UICC 2, UICC 1 having an ISIM with IMPU-1 and IMPI-1 and a USIM with IMSI-1, while UICC-2 has IMPU-1, IMPI-2 and IMSI-2, respectively.

If this configuration however happens, and there is a CS call in place between two devices, and the initiator initiates an IMS session to the E.164 of the CS call, this IMS session typically forks to all devices that are registered under this E.164 in IMS. This is not a big problem in INVITE requests of SIP, where as a result of forking, all devices are typically ringing and the end user can decide which one to use to accept the session.

But this is a bigger problem with SIP OPTIONS request that has been mandated by the specification 3GPP R7 TR 24.879. According to the specification 3GPP R7 TR 24.879, the SIP user agent (UA) must generate the OPTIONS request to the E.164 of the CS call, at the beginning of the CS call, in order to learn the SIP capabilities of the other party. In a similar way as with the INVITE request, the OPTIONS request forks to all devices under the E.164. The OPTIONS request is however answered automatically by the SIP user agent (UA), thus only the "200 OK"-message (carrying the IMS capabilities) from the first device is responded back to the originator of the OPTIONS inquiry. Thus, the sender of the OPTIONS request does not learn the capabilities of the device in which the respective user has the CS call ongoing, but the capabilities of a randomly chosen one single device.

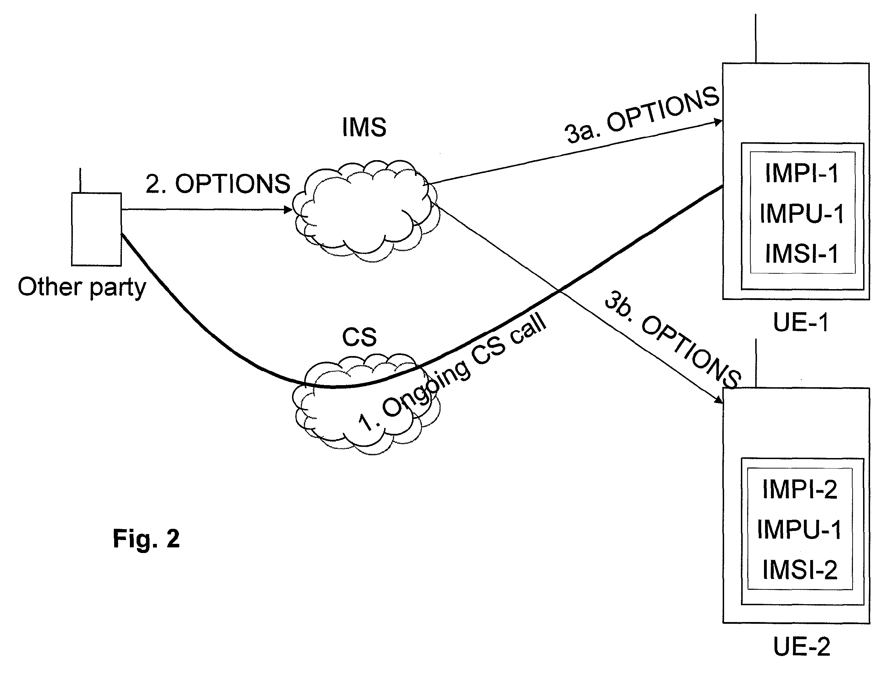

Fig. 2 illustrates the forking problem in a multi terminal configuration as described in Fig. 1.

The specification 3GPP R7 TR 24.879 has tried to solve the forking problem with so-called callee capabilities and caller preferences (according to the respective documents RFC 3840 and RFC 3841), i.e. the +g.3gpp.cs-voice feature tag that has been introduced in the specification 3GPP R7 TR 24.879. It should be noted that the feature tag does not solve the problem, since multiple devices might have equal capabilities, in what case the request still forks.

The Internet-Draft "Obtaining and Using Globally Routable User Agent (UA) URIs (GRUU) in the Session Initiation Protocol (SIP)" (available at http://www.ietf.org/internet-drafts/draft-ietf-sip-gruu-06.txt) defines a mechanism how the SIP UA can obtain a globally routable and unique URI from the SIP proxy/registrar. The GRUU can be used to differentiate for routing purposes the IMS devices registered to the same IMPU. The release 7 (R7) for the specification of the IMS has TR 23.808 to adopt the GRUU to 3GPP IMS.

The GRUU was also proposed to solve the routing problem with multiple terminals in the specification 3GPP R7 TR 24.879. The proposal did not proceed as it proposed that the UE obtains a GRUU and advertises it as a UUS data element in a CS call. However, the UUS has a very limited size, and the same UUS element needs to carry also other data like UE radio conditions. Thus, it was seen that a regular complete GRUU (a SIP URI with user and host parts or even E.164) is simply too long to be carried in a UUS.

### Summary of the Invention

Therefore, it is an object to overcome the above recognized shortcomings of the prior art.

According to one aspect of the present invention, this object is solved by a method of providing an unambiguous connection between a first user equipment and a second user equipment in a combination of a circuit switched call and a packet switched multimedia session, comprising constructing an equipment identifier by a first user equipment, wherein the equipment identifier distinguishes the first user equipment from any other user equipment of a same user and comprises a uniform resource name; registering the first user equipment in a session control protocol environment by sending the equipment identifier to a session control protocol registrar; returning a uniform resource identifier by the session control protocol registrar, wherein the uniform resource identifier routes to a session control protocol application, and wherein the uniform resource identifier includes the equipment identifier as an opaque parameter; and advertising the opaque parameter by the first user equipment in a circuit switched call.

Advantageous modifications of this aspect are as follows.

The step of advertising the opaque parameter comprises advertising the opaque parameter in a user to user service.

The packet switched multimedia session comprises an internet protocol multimedia subsystem session.

The method further comprises retrieving a circuit switched call related identifier of the first user equipment by the second user equipment; retrieving the equipment identifier from the opaque parameter by the second user equipment; constructing a packet switched multimedia session related identifier of said first user equipment by the second user equipment; and requesting a packet switched multimedia session with the first user equipment by the second user equipment, by using the packet switched multimedia session related identifier of the first user equipment.

The step of requesting an packet switched multimedia session with the first user equipment includes a routing to the first user equipment.

The method further comprises providing the second user equipment with the packet switched multimedia session related capabilities of the first user equipment.

According to a second aspect of the present invention, the object is solved by a system configured to provide an unambiguous connection between a first user equipment and a second user equipment in a combination of a circuit switched call and a packet switched multimedia session, comprising: a first user equipment configured to construct an equipment identifier which distinguishes the first user equipment from any other user equipment of a same user and comprises a uniform resource name; and a session control protocol registrar configured to register the first user equipment in a session control protocol environment upon receipt of the equipment identifier, and to return a uniform resource identifier which routes to a session control protocol application, and wherein the uniform resource identifier includes the equipment identifier as an opaque parameter; wherein the first user equipment is further configured to advertise the opaque parameter in a circuit switched call.

Advantageous modifications of the second aspect are as follows.

The configuration to advertise the opaque parameter includes to advertise the opaque parameter in a user to user service.

The packet switched multimedia session comprises an internet protocol multimedia subsystem session.

The system further comprises the second user equipment which is configured to retrieve a circuit switched call related identifier of the first user equipment, to retrieve the equipment identifier from the opaque parameter, to construct a packet switched multimedia session related identifier of said first user equipment; and to request an a packet switched multimedia session with the first user equipment by using the packet switched multimedia session related identifier of the first user equipment.

The system is configured to perform a routing to the first user equipment as a response to a request by the second user equipment for an packet switched multimedia session with the first user equipment.

The system is further configured to provide the second user equipment with the packet switched multimedia session related capabilities of the first user equipment.

According to a third aspect of the present invention, the object is solved by a user equipment configured to provide an unambiguous connection with a second user equipment in a combination of a circuit switched call and a packet switched multimedia session, wherein the user equipment is further configured to construct an equipment identifier which distinguishes the user equipment from any other user equipment of a same user and comprises a uniform resource name; to send the equipment identifier to a session control protocol registrar for registering the user equipment in a session control protocol environment; to receive a uniform resource identifier which routes to a session control protocol application, and wherein the uniform resource identifier includes the equipment identifier as an opaque parameter; and to advertise the opaque parameter in a circuit switched call.

Advantageous modifications of the third aspect are as follows.

The user equipment is further configured to advertise the opaque parameter in a user to user service.

The packet switched multimedia session comprises an internet protocol multimedia subsystem session.

According to a fourth aspect of the present invention, the object is solved by a user equipment configured to provide an unambiguous connection with a second user equipment in a combination of a circuit switched call and a packet switched multimedia session, wherein the user equipment is further configured to retrieve a circuit switched call related identifier of the second user equipment, to retrieve an equipment identifier from an opaque parameter included in a uniform resource identifier which routes to a session control protocol application, to construct a packet switched multimedia session related identifier of said second user equipment; and to request a packet switched multimedia session with the second user equipment by using the packet switched multimedia session related identifier of the second user equipment.

Advantageous modifications of the fourth aspect are as follows.

The packet switched multimedia session comprises an internet protocol multimedia subsystem session.

The user equipment is further configured to process a routing to the second user equipment as a response to a request for a packet switched multimedia session with the second user equipment.

The user equipment is further configured to receive and process the packet switched multimedia session related capabilities of the second user equipment.

According to a fifth aspect of the present invention, the object is solved by a computer program product comprising processor implementable instruction portions for performing all the steps of a method according to the first aspect of the present invention or any of its modifications.

Advantageous modifications of the fifth aspect are as follows.

The computer program product comprises a software medium storing said processor implementable instruction portions.

The computer program product is directly loadable into the internal memory of a computer.

According to a sixth aspect of the present invention, the object is solved by a signal carrying processor implementable instructions for controlling a computer to carry out all the steps of a method according to the first aspect of the present invention or any of its modifications.

### Brief Description of the Drawings

Further details, advantages and features of the present invention become more readily apparent from the following detailed description of the preferred embodiments of the present invention which is to be taken in conjunction with the appended drawings, in which:
Fig. 1 shows a configuration which is possible in the prior art, where an end user has multiple IMS terminals registered to the same IMPU (associated to the same E.164 number);
Fig. 2 shows the forking problem which results from the configuration depicted in Fig. 1;
Fig. 3 shows the registration procedure of a first user equipment at a session control protocol registrar according to a preferred embodiment of the present invention;
Fig. 4 shows a CS call establishment between a first and a second user equipment according to a preferred embodiment of the present invention; and
Fig. 5 shows an IMS request procedure between a first and a second user equipment according to a preferred embodiment of the present invention.

### Detailed Description of the preferred Embodiments of the present Invention

According to the Internet draft "Obtaining and Using Globally Routable User Agent (UA) URIs (GRUU) in the Session Initiation Protocol (SIP)", an opaque parameter is defined. An opaque parameter can be used to construct a GRUU that holds the address-of-record (AoR), i.e. the IMPU, but is still unique.

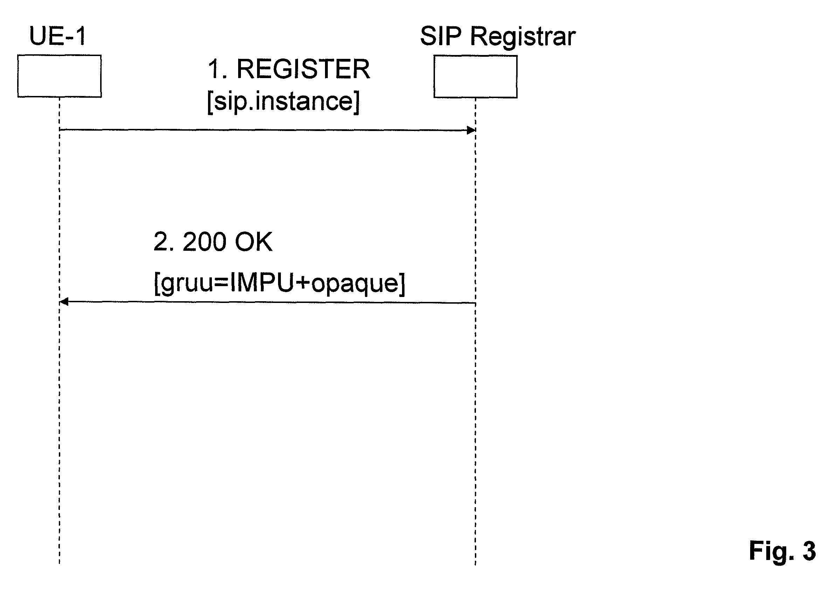

According to a preferred embodiment of the present invention, the UE constructs the PMI as per the specification 3GPP R7 TR 24.879. The UE then uses the PMI as a SIP Instance ID to obtain the GRUU from IMS. As per GRUU I-D, the IMS returns an opaque parameter to construct the GRUU. This is illustrated in Fig. 3.

According to a preferred embodiment of the present invention, in a first step, the UE obtains the GRUU using the PMI in the SIP Instance ID.

Below is presented an implementation example for a respective listing.

REGISTER sip:example.com SIP/2.0 Via: SIP/2.0/UDP 192.0.2.1;branch=z9hG4bKnashds7 Max-Forwards: 70 From: Callee <sip:callee@example.com>;tag=a73kszlfl Supported: gruu To: Callee <sip:callee@example.com> Call-ID: 1j9FpLxk3uxtm8tn@192.0.2.1 CSeq: 1 REGISTER Contact: <sip:callee@192.0.2.1> ;+sip.instance="pmi-1" Content-Length: 0

It is to be noted that as per GRUU I-D, the instance ID must be an URN (Uniform Resource Name, see document RFC 2141). This means that according to a preferred embodiment of the present invention, some existing URN can be used, or a new one could be defined. An existing URN that could be used is the universally unique identifier (UUID) according to document RFC 4122. An URN name space for the international mobile equipment identity (IMEI) and medium access control (MAC) addresses may be defined in the future. The problem with all the above are that they are too long to be carried in the user-to-user signaling service 1 (UUS1) as per the specification 3GPP R7 TR 24.879. The specification 3GPP R7 TR 24.879 reserves 16 bits for PMI. According to a preferred embodiment of the present invention, a solution is that the PMI is constructed from 16 last significant bits of the UUID, IMEI or MAC, as it is still very unlikely that the same user would hold multiple devices where these 16 bits would be equal. Another solution is that the specification 3GPP R7 TR 24.879 defines a new URN for the PMI (16 bits long), which requires an internet assigned numbers authority (IANA) registration for the URN name space.

According to a preferred embodiment of the present invention, in a second step, the IMS returns the GRUU with the PMI in the opaque parameter.

Below is presented an implementation example for a respective listing. SIP/2.0 200 OK Via: SIP/2.0/UDP 192.0.2.1;branch=z9hG4bKnashds7 From: Callee <sip:callee@example.com>;tag=a73kszlfl To: Callee <sip:callee@example.com> ;tag=b88sn Require: gruu Call-ID: 1j9FpLxk3uxtm8tn@192.0.2.1 CSeq: 1 REGISTER <allOneLine> Contact: <sip:callee@192.0.2.1> ;gruu="sip:callee@example.com; opaque=pmi-1" ;+sip.instance="pmi-1" ;expires=3600 </allOneLine> p-associated-uri: <tel:+358504801498> Content-Length: 0

In IMS, it is possible to associate multiple public user identities into one implicitly registered set, and to register the rest of them implicitly at once when one public user identity is registered. According to a preferred embodiment of the present invention, the tel URI of the user is associated to the same set with a SIP URI, and the require header with the GRUU parameter implies that the S-CSCF (serving call state control function) must create a GRUU for all public user identities in the same associated set. The easiest way to achieve this is that the S-CSCF allocates the same opaque parameter for all public user identities in the set, thus the tel URI with opaque parameter becomes routable from the S-CSCF point of view and can be used to reach this particular UE.

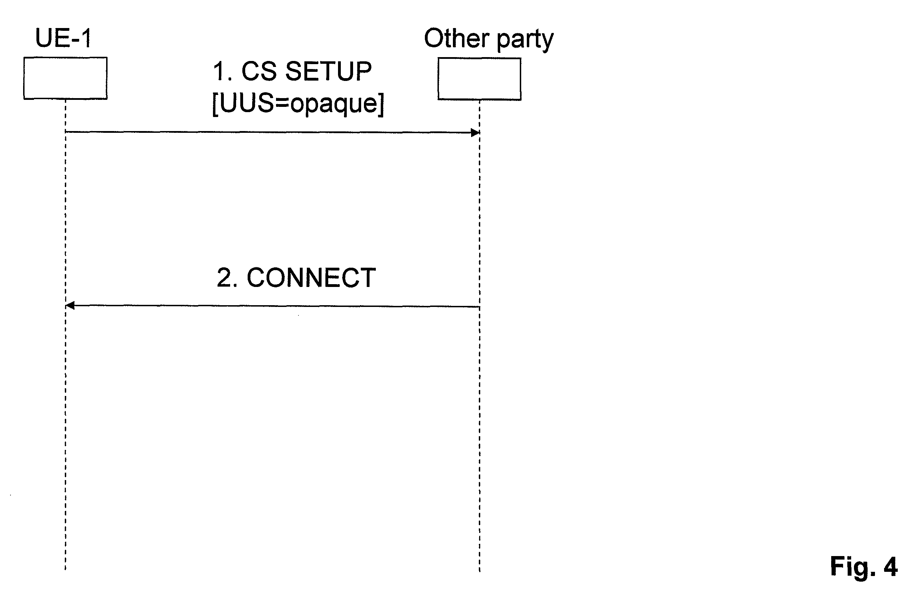

According to a preferred embodiment of the present invention, in a third step, the UE advertises the PMI in the UUS in the CS call. The other party learns the PMI as per the specification 3GPP R7 TR 24.879. This is illustrated in Fig. 4.

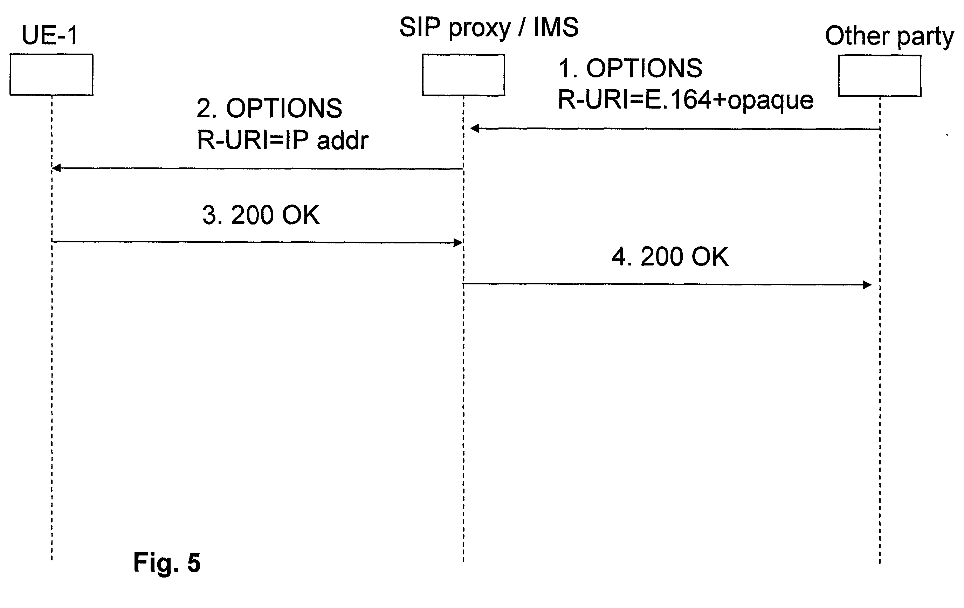

According to a preferred embodiment of the present invention, in a fourth step, the other party wants to send an IMS request (e.g. OPTIONS). It constructs a Request-URI with the E.164 it has learnt in the CS call and the PMI as found in the opaque parameter. This is illustrated in Fig. 5.

Below is presented an implementation example for a respective listing. OPTIONS tel:+358504801498;opaque=pmi-1 SIP/2.0

According to a preferred embodiment of the present invention, in a fifth step, the IMS knows to route the request only to the SIP Instance (SIP UA) that obtained the GRUU.

In 3GPP R6 IMS, the originating S-CSCF performs a database query according to the telephone number mapping (ENUM) of the domain name server (DNS) to translate the tel URI to SIP URI. After the translation, it routes the request to the next hop by setting the translated SIP URI to the R-URI. In this case, the translation looses the URI parameters such as opaque. This however may need to be changed in 3GPP R7 IMS due to local numbering work item (ongoing in 3GPP R7 IMS). Local numbers need to be analyzed and translated in the visited network. This means most likely that the originating S-CSCF need to pass the original tel URI, including URI parameters, unchanged to the next hop. (Local numbers will most likely use the phone-context URI parameter to carry a hint about the domain where the number should be analyzed.) Note that details of local numbering work are not known at present, since the work has just started. The local numbering work would mean that the current procedures of originated S-CSCF must be changed to pass the original URI parameters unchanged to the next hop. This would provide a solution according to a preferred embodiment of the present invention as well, to carry the opaque parameter to the terminated S-CSCF.

If the instance ID used to obtain the GRUU was UUID (or IMEI, MAC or any other URN that does not fit to the UUS information element as defined in the CSI), then the terminating S-CSCF should evaluate the opaque parameter by considering only the certain amount of last significant bits as a match for certain GRUU. For example, tel:+358504801498;opaque=6789 would be a match even if the complete instance ID was 123456789. It is very unlikely that the same user has registered multiple devices to the same public user ID where the last 16 significant bits would be equal.

According to a preferred embodiment of the present invention, in a sixth step, the other party learns the IMS capabilities via the 200 OK for OPTIONS, as per specification 3GPP R7 TR 24.879.

While preferred embodiments of the present invention have been described above by referring to the session initiation protocol (SIP), it is to be noted that the present invention is not limited to the session initiation protocol as an example of a session control protocol, and that any other protocol suitable for controlling multimedia sessions would be also applicable and thus refer to further preferred embodiments of the present invention.

As is described above, according to preferred embodiments of the present invention, there is provided a method and system of providing an unambiguous connection between a first user equipment and a second user equipment in a combination of a circuit switched call and a packet switched multimedia session. The method comprises to construct an equipment identifier by a first user equipment, wherein the equipment identifier distinguishes the first user equipment from any other user equipment of a same user and comprises a uniform resource name. Further, the first user equipment is registered in a session control protocol environment by sending the equipment identifier to a session control protocol registrar. In addition, a uniform resource identifier is returned by the session control protocol registrar, wherein the uniform resource identifier routes to a session control protocol application, and wherein the uniform resource identifier includes the equipment identifier as an opaque parameter.

Finally, the opaque parameter is advertised by the first user equipment in a circuit switched call.

While is has been described above what are presently considered to be preferred embodiments of the present invention, it is fully apparent to the skilled person that various changes and modifications may be made thereto without departing from the scope of the present invention which is defined by the appended claims.

## Claims

1. A method, comprising:
constructing an equipment identifier by a first user equipment, wherein the equipment identifier distinguishes the first user equipment from any other user equipment of a same user and comprises a uniform resource name;
registering the first user equipment in a session control protocol environment by sending the equipment identifier to a session control protocol registrar;
receiving a uniform resource identifier by the session control protocol registrar, wherein the uniform resource identifier routes to a session control protocol application, and wherein the uniform resource identifier includes the equipment identifier as an opaque parameter; and
advertising the opaque parameter by the first user equipment in a circuit switched call.

2. The method according to claim 1, wherein the step of advertising the opaque parameter comprises advertising the opaque parameter in a user to user service.

3. The method according to claim 1, wherein said packet switched multimedia session comprises an internet protocol multimedia subsystem session.

4. The method according to claim 1, further comprising
retrieving a circuit switched call related identifier of the first user equipment by the second user equipment;
retrieving the equipment identifier from the opaque parameter by the second user equipment;
constructing a packet switched multimedia session related identifier of said first user equipment by the second user equipment; and
requesting a packet switched multimedia session with the first user equipment by the second user equipment, by using the packet switched multimedia session related identifier of the first user equipment.

5. The method according to claim 4, wherein the step of requesting a packet switched multimedia session with the first user equipment includes a routing to the first user equipment.

6. The method according to claim 5, further comprising
providing the second user equipment with the packet switched multimedia session related capabilities of the first user equipment.

7. A system, comprising:
a first user equipment configured to construct an equipment identifier which distinguishes the first user equipment from any other user equipment of a same user and comprises a uniform resource name; and
a session control protocol registrar configured to register the first user equipment in a session control protocol environment upon receipt of the equipment identifier, and to return a uniform resource identifier which routes to a session control protocol application, and
wherein the uniform resource identifier includes the equipment identifier as an opaque parameter;
wherein the first user equipment is further configured to advertise the opaque parameter in a circuit switched call.

8. The system according to claim 7, wherein the configuration to advertise the opaque parameter includes to advertise the opaque parameter in a user to user service.

9. The system according to claim 7, wherein said packet switched multimedia session comprises an internet protocol multimedia subsystem session.

10. The system according to claim 7, further comprising the second user equipment which is configured
to retrieve a circuit switched call related identifier of the first user equipment,
to retrieve the equipment identifier from the opaque parameter,
to construct a packet switched multimedia session related identifier of said first user equipment; and
to request an a packet switched multimedia session with the first user equipment by using the packet switched multimedia session related identifier of the first user equipment.

11. The system according to claim 10, wherein the system is configured to perform a routing to the first user equipment as a response to a request by the second user equipment for an packet switched multimedia session with the first user equipment.

12. The system according to claim 11, wherein the system is further configured to provide the second user equipment with the packet switched multimedia session related capabilities of the first user equipment.

13. A user equipment which is configured:
to construct an equipment identifier which distinguishes the user equipment from any other user equipment of a same user and comprises a uniform resource name;
to send the equipment identifier to a session control protocol registrar for registering the user equipment in a session control protocol environment;
to receive a uniform resource identifier which routes to a session control protocol application, and wherein the uniform resource identifier includes the equipment identifier as an opaque parameter; and
to advertise the opaque parameter in a circuit switched call.

14. The user equipment according to claim 13, further configured to advertise the opaque parameter in a user to user service.

15. The user equipment according to claim 13, wherein said packet switched multimedia session comprises an internet protocol multimedia subsystem session.

16. A user equipment which is configured:
to retrieve a circuit switched call related identifier of the second user equipment,
to retrieve an equipment identifier from an opaque parameter included in a uniform resource identifier which routes to a session control protocol application,
to construct a packet switched multimedia session related identifier of said second user equipment; and
to request a packet switched multimedia session with the second user equipment by using the packet switched multimedia session related identifier of the second user equipment.

17. The user equipment according to claim 16, wherein said packet switched multimedia session comprises an internet protocol multimedia subsystem session.

18. The user equipment according to claim 16, further configured to process a routing to the second user equipment as a response to a request for a packet switched multimedia session with the second user equipment.

19. The user equipment according to claim 18, further configured to receive and process the packet switched multimedia session related capabilities of the second user equipment.

20. A computer program product comprising processor implementable instruction portions for performing all the steps of a method according to any one of claims 1-6.

21. The computer program product according to claim 20, wherein said computer program product comprises a software medium storing said processor implementable instruction portions.

22. The computer program product according to claim 20, wherein said computer program product is directly loadable into the internal memory of a computer.

23. A signal carrying processor implementable instructions for controlling a computer to carry out all the steps of a method according to any one of claims 1-6.
